# EUROPEAN PATENT APPLICATION

(11) **EP 2 043 410 A1**
(43) Date of publication of application: **01.04.2009**
(21) Application number: 06741748.5
(22) Date of filing: 27.04.2006
(51) Int. Cl.: H05B 41/295

(54) **AN ELECTRONIC DRIVER FOR A FLUORESCENT LAMP**

(71) Applicant: Huen, Waikei, Yue Wa Garden Macao (CN); Poon, Lock Kee Rocky, Macau (CN); Li, Yun, Macau (CN)
(72) Inventor: Huen, Waikei, Yue Wa Garden Macao (CN); Poon, Lock Kee Rocky, Macau (CN); Li, Yun, Macau (CN)
(74) Representative: Sandstedt, Jonas Sven James
(86) International application number: PCT/CN2006/000827
(87) International publication number: WO 2007/124615

(57) **Abstract**

The present invention relates to an electric driver for fluorescent lamp, comprising an input circuit for rectifying and filtering an inputted alternating voltage with certain amplitude and a power factor correction circuit for further amplifying the voltage rectified and filtered by the input circuit to obtain a stable DC voltage with higher amplitude. The electric driver further comprises an output circuit for receiving the DC voltage outputted from the power factor correction circuit as its operating power supply, and providing the fluorescent lamp with an output without input transformer and without output transformer.

## Description

### TECHNICAL FIELD

The present invention relates to an electronic driver, and more specifically, to an electric driver for a fluorescent lamp.

### BACKGROUND

Fluorescent lamp is kind of high voltage gas discharge lamp, widely used in people's daily life, such as industry, agriculture, streets, exhibition centers, parking lots near squares, industrial and mining establishments and large-scale salons, because it features high illumination, no flickering, longer service life and lower power consumption.

Nowadays, the world is facing increasingly serious problems of energy shortage. Thus, people have to save power in their daily life and in various public facilities, which has become an urgent affair. The fluorescent lamp itself is a well-developed product. However, during its past appliance, its drive circuit encounters the problem of low circuit frequency, high inductance power consumption, low efficiency and high cost. Consequently, people have long been hoping to have an electric driver for fluorescent lamp with low power consumption, higher efficiency, wider input voltage range and stable illumination.

### SUMMARY OF THE INVENTION

This invention is an electric driver for fluorescent lamp designed for solving the above problems.

This invention provides an electric driver for fluorescent lamp which comprises: an input circuit for rectifying and filtering the inputted alternating voltage with certain amplitude; a power factor correction circuit for further amplifying the inputted voltage rectified and filtered through the input circuit to obtain a stable DC voltage with higher amplitude; and an output circuit for receiving the DC voltage outputted from the power factor correction circuit as its operating power supply and supplying the fluorescent lamp an output without input transformer and without output transformer.

According to the electric driver for fluorescent lamp of this invention, wherein the input circuit includes a bridge-type rectifier and an LC filter, converting 220V AC input voltage into about 300V pulse DC voltage; the power factor correction circuit includes a further boosting circuit for obtaining a stable DC voltage of about 400V from the pulse DC voltage of 300V; the control circuit provides a high voltage for exciting the fluorescent lamp, said high voltage is about 4-5kV at a frequency of about 4-50kc.

According to the electric driver for fluorescent lamp of this invention, wherein the input circuit further comprises: a current protector, an anti-EMI coil (L1) and a thermal sensitive resistor.

According to the electric driver for fluorescent lamp of this invention, wherein the power factor correction circuit comprises: an inductor (L3), a high power transistor (Q1), a rectifying diode (D1), a capacitor (C5), a comparator, a multiplier, and a current difference amplifier, wherein the voltage comparison circuit controls the output through voltage comparison, capable of ensuring stable output voltage, the circuit can also be configured to have over-current protection and under-voltage protection, such that high-frequency striking to the main circuit from electricity grid can be prevented.

According to the electric driver for fluorescent lamp of this invention, wherein the voltage comparison circuit, multiplier, and current difference amplifier are included in an IC module L6561. The gate G of the high power regulator (Q1) is controlled by a square-wave signal generated by L6561, pin 1 and pin 2 of L6561 has a voltage comparison circuit, controlling the output through voltage comparison. Pin 3 of L6561 has a multiplier, whose oscillating frequency can be determined by external circuit. Pin 5 of L6561 has a current difference amplifier, current inputted from outside controls the output of L6561 after current detection.

According to the electric driver for fluorescent lamp of this invention, wherein configuration of the circuit makes the input voltage maintain normal operation of the driver within the input voltage and frequency range as defined according to the international standard, for example, ensuring normal operation of the driver at the voltage range of 90-300V.

According to the electric driver for fluorescent lamp of this invention, wherein the control circuit comprises: a half bridge drive circuit, a series-connected resonance circuit, an under-voltage locking circuit, a frequency-adjustable voltage control oscillator, a zero voltage detector and a zero current comparator.

According to the electric driver for fluorescent lamp of this invention, wherein the under-voltage locking circuit, frequency-adjustable voltage control oscillator, zero voltage detector and zero current comparator are included in an IC module IR2520. The IR2520 has a built-in under-voltage locking circuit, an externally frequency-adjustable voltage control oscillator, a zero voltage detector, a zero current comparator, and a half bridge driver for driving the transistors (Q2Q3) to turn on and turn off. The circuit goes into a state of under-voltage locking when the power supply voltage is unable to activate IR2520 to operate, the filament preheating circuit is activated when the power supply voltage goes up to be able to activate IR2520, during the starting step, the voltage control oscillator begins to preheat the filament at a frequency above 2 times of the Fmin frequency, the Fmin is the inherent frequency of the voltage control oscillator, and can be adjusted through an external component (R14), the time of preheating can be adjusted through an external component (C8); the IR2520 circuit is configured with wave crest ratio and zero voltage switch protection, by monitoring the voltage at the half bridge midpoint, in case of over-current or saturation of inductance within the lamp loop, IR2520 goes into error mode, the gate driver is locked to a low level; if the triggering fails and the lamp test is invalid, the filament is open-circuited, the IR2520 goes into error mode, and the gate driver is locked.

The circuit of the electric driver for fluorescent lamp of this invention uses high frequency excitation and active PFC circuit to enhance power factors, its power factor reaches 99%, capable of driving 18W, 36W and 55W fluorescent lamps and ensuring their normal working. The inputted voltage range can be 90-300V. Its working frequency is adjustable and the inputted grid frequency is applicable to the scope of local and international regulations.

The active power factor correction circuit of this invention formed by the L6561 IC block enhances the power of the circuit, providing the circuit with good under-voltage locking and overflow protection. Further, it also has the advantages of smaller in size and lighter in weight.

This invention uses advanced IC block IR2520 to form a half bridge drive circuit without input transformer and without output transformer, it realizes energy saving and high efficiency. It has the protective functions in case of filament open circuit and non-lamp. The circuit can automatically protect itself in case of filament open circuit, non-lamp or trigger failure. It also has the protective function of low AC power supply. It features under-voltage locking circuit and filament preheating, and the time of preheating is adjustable.

### BRIEF DESCRIPTION OF THE DRAWINGS

In combination with the attached drawings and embodiments, those skilled in the art are able to better understand the above mentioned features and other features and advantages of this invention.
Fig. 1 is a general circuit block diagram showing an embodiment of an electric driver for fluorescent lamp according to the present invention, including functional block 1, functional block 2, functional block 3 and connections thereof;
Fig. 2 is a general circuit diagram for the embodiments of the electric driver for fluorescent lamp according to the present invention;
Fig. 3 is a circuit diagram of the input rectifying circuit portion (rectifying EMI) of the electric driver for fluorescent lamp, corresponding to functional block 1 in Fig. 1;
Fig. 4 is a circuit diagram of the active power factor correction circuit (APFC) portion of the electric driver for fluorescent lamp, corresponding to functional block 2 in Fig. 1;
Fig. 5 is a circuit diagram of the control circuit (lamp drive circuit) portion of the electric driver for fluorescent lamp, corresponding to functional block 3 in Fig. 1;
Fig. 6 is respective waveforms at point A, B, C in the circuit diagram.

### PREFERRED EMBODIMENTS

The fluorescent lamp provided by this invention will be described with reference to the embodiments. Those skilled in the art should understand that these embodiments in the specification are intended to give examples, and shall not be considered as specific limitations to this invention.

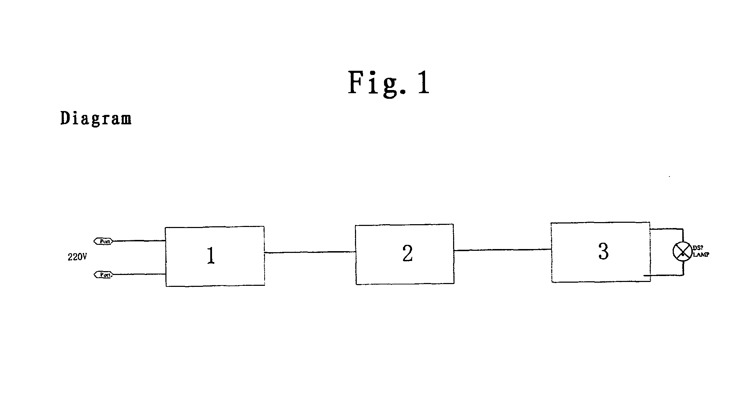

Fig. 1 is a general circuit block diagram showing an embodiment of an electric driver for fluorescent lamp according to the present invention, including functional block 1, functional block 2, functional block 3 and connections thereof.

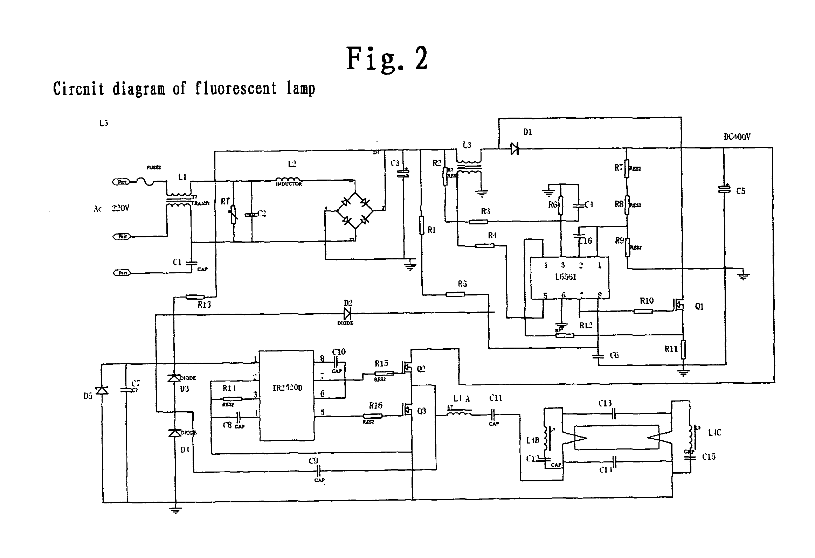

According to the embodiment of this invention, Fig. 2 is a general circuit diagram of the electric driver for fluorescent lamp.

The following description of the circuit diagram is focused on contents relating to the technical problems or technical effects of this invention. Other specific details that are not mentioned in the following description can be understood by those skilled in the art by reviewing the circuit diagram.

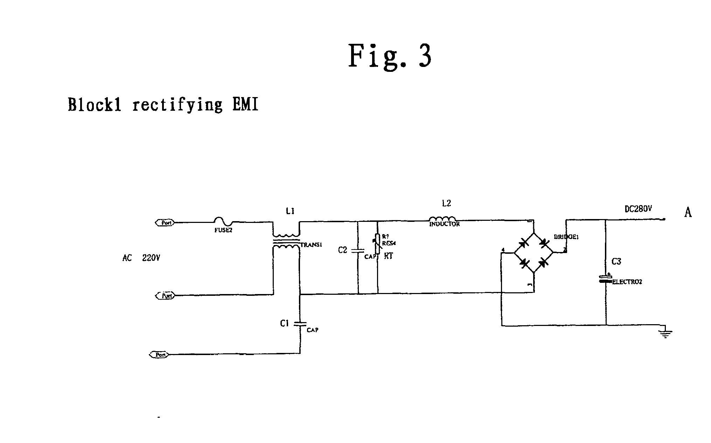

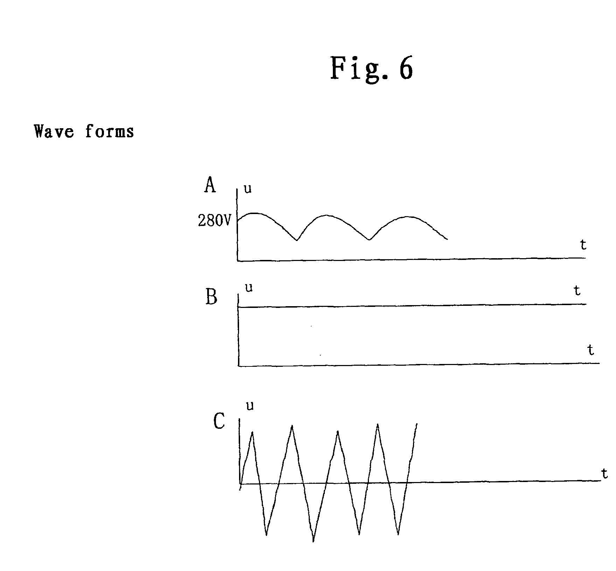

Fig. 3 is a circuit diagram of the input rectifying circuit portion of the electric driver for fluorescent lamp in Fig. 1, corresponding to functional block 1 in Fig. 1. It can be seen from the diagram that major components of the input circuit include a bridge-type rectifier and L2C2 filter circuit, and in order to have better effect, it may also include a current protector (FUSE1), an anti-EMI wiring coil (capable of anti-EMI), a thermal sensitive resistor, a capacitor C3, etc. The function of the input circuit is to rectify an input AC 220V, and filter it through C3, to form 280V pulse DC voltage (see waveform A in Fig. 6).

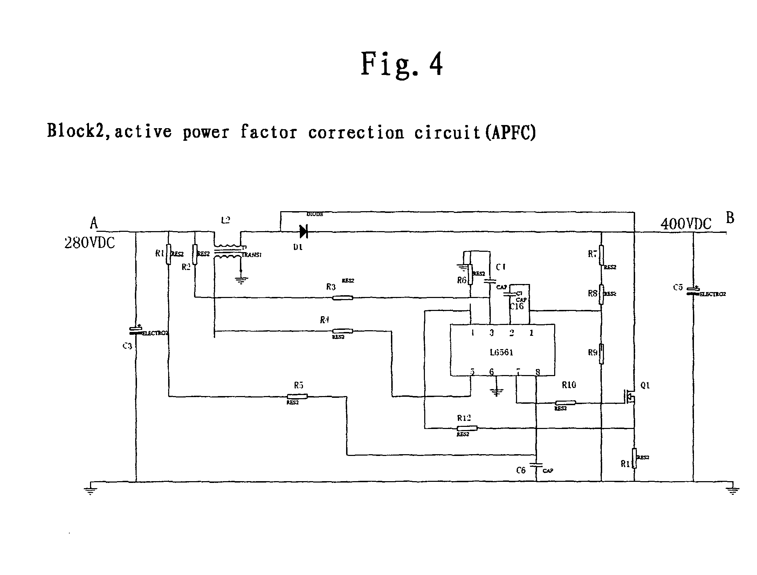

Fig. 4 is a circuit diagram of the active power factor correction circuit (APFC) portion of the electric driver for fluorescent lamp, corresponding to functional block 2 in Fig. 1. Its major components include L6561 (IC1), inductor L3, power transistor Q1, rectifying diode D1, capacitor C5 , etc.

The following description is about major functions of the circuit:
Q1 is a high power transistor with voltage tolerance of 400V. The gate G is controlled by a square-wave signal generated by L6561. A pulse voltage is applied to the positive end of D1, being converted into about 400V DC voltage (see waveform B in Fig. 6) through rectification of D1C5, providing power supply to the output circuit.

The circuit also includes a voltage comparator, a multiplier, and a current difference amplifier, wherein the voltage comparator, a multiplier, and a current difference amplifier can be integrated in one IC module. For example, the circuit listed in this embodiment uses an IC module L6561 (for detailed information about this integrated circuit, please refer to relative circuit manual or access web page about products of the manufacturer, STMocroelectronics, for example, the following web page: http://www.ic-on-line.cn/search.asp).

The pin 1 and 2 of IC module L6561 have a voltage comparison circuit, even if the input voltage varies between 85-300V, preferably 90-300V, or more preferably 85-280V, a stable output voltage can be ensured. Further, the circuit can be configured to stop output in case of under-voltage. Since the circuit has over-current protective function and over-voltage protective function, dynamically high frequency striking from electricity grid can be prevented.

The pin 3 of L6561 has a multiplier whose oscillating frequency can be determined by external R6C4 and L3 secondary voltage ripple, thus the efficiency is improved through pulse width modulation.

The pin 5 of L6561 has a current difference amplifier, externally inputted current is protected against overflow through current detection.

L6561 has an OVP circuit having the effect of over-voltage protection, so as to prevent dynamically high frequency striking from electricity grid.

Above configuration achieves a wider input voltage range and can operate normally within a widely variable range of input voltage and frequency as specified in international standard.

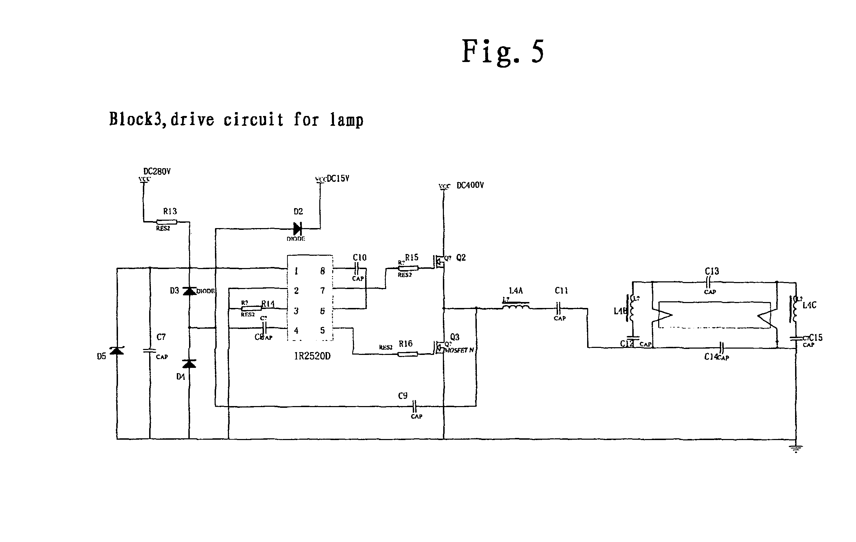

Fig.5 is the control circuit (i.e. the lamp drive circuit) portion of the electric driver for fluorescent lamp of Fig. 1, corresponding to functional block 3 in Fig. 1. The waveform at C point in the drawing is shown in Fig. 6. Its major components include: the half bridge drive circuit formed by Q3Q2, the series-conneted resonance circuit formed by L4C11 and the lamp in series, the resonance frequency of which is 40-45kc. The circuit also includes an under-voltage locking circuit, a frequency-adjustable voltage control oscillator, zero voltage detector, zero current comparator, and a half bridge driver for driving Q2Q3 to turn on and turn off. The under-voltage locking circuit, the frequency-adjustable voltage control oscillator, the zero voltage detector, the zero current comparator, and the half bridge driver for driving Q2Q3 to turn on and turn off can be integrated in an IC. For example, the circuit of this embodiment uses IC IR2520 (for detailed information about this integrated circuit, please refer to relative circuit manual or access web site of the manufacturer International Inc, for example, the following web page: http://www.irf.com/indexsw.html).

This embodiment uses advanced IC block IR2520 to form a half bridge drive circuit without input transformer and without output transformer, it realizes energy saving and high efficiency. It has the protective functions in case of lamp disconnection and lamp missing. The circuit can automatically protect itself in case of filament open circuit, non-lamp or trigger failure. It features under-voltage locking circuit and filament preheating, and the time of preheating is adjustable.

The following description of the circuit of this embodiment is the configuration and functions brought in by IR2520.

IR2520 (IR for short) has a built-in under-voltage locking circuit, and externally frequency-adjustable voltage control oscillator, zero voltage detector, zero current comparator, and a half bridge driver for driving Q2Q3 to turn on and turn off. The circuit goes into a state of under-voltage locking when the power supply voltage is unable to activate the IR to operate, the filament preheating circuit is activated when the power supply voltage goes up to be able to activate the IR, that means during the starting step, the voltage control oscillator begins to preheat the filament at a frequency above 2 times of the Fmin frequency. The Fmin is the inherent frequency of the voltage control oscillator, and the frequency of the voltage control oscillator (Fmin) can be adjusted through R14, the frequency of which is 40-45kc. Advantage of using high frequency signal to preheat the filament is to prevent soft actuation of high startup frequency causing lamp flickering. The time of preheating can be adjusted through C8. With the increase of power supply voltage, the Fmin falls down gradually until L4C11 resonate (F), the magnitude of resonance is 4kv-5kv. During resonance, voltages at both ends of the lamp heighten to make the lamp illuminate. At this moment, the resonance loop current reaches its maximum, and the resonance frequency is about 40-45kc. At this moment the lamp goes into an operational period of normal illumination. The IR circuit has a built-in wave peak ratio and zero voltage protection switch, through monitoring of the voltage at the midpoint (pin 6 of IR) of the half bridge, in case of over-current or saturation of inductance within the lamp loop, the threshold voltage inputted from the voltage detector is higher than 4.6V, the IR goes into error mode, the gate driver is locked to a low level. If it fails to be activated and the lamp test is invalid, the filament is opened, the threshold voltage inputted from the voltage detector is now lower than 1 V, the IR goes into error mode, and the gate driver is locked. L4A, L4B and L4C are three windings on a same magnetic core. When L4AC11 is in resonance, L4B and L4C simultaneously start oscillation to preheat the lamp tube, so that the lamp tube can be actuated quickly.

According to the result of actual adjustment testing, the circuit of this invention can drive fluorescent lamps of 18W, 36W and 55W, ensuring normal operation. After parameters of the circuits of this invention are adjusted and optimized, the guaranteed power factor of the whole drive circuit can be up to 99%.

In summary, an embodiment of the invention is described with reference to the drawings and specific circuit. Those skilled in the art may understand that many kinds of modifications can be made to the specific circuit forms and components of this invention without departing beyond the designs concept of this invention and the scope sought for protection.

## Claims

1. An electric driver for fluorescent lamp, comprises:
an input circuit for rectifying and filtering an inputted alternating voltage with certain amplitude;
a power factor correction circuit for further amplifying the voltage rectified and filtered by the input circuit to obtain a stable DC voltage with higher amplitude;
an output circuit for receiving the DC voltage outputted from the power factor correction circuit as its operating power supply, and providing the fluorescent lamp with an output without input transformer and without output transformer.

2. The electric driver for fluorescent lamp according to Claim 1, wherein
the input circuit including bridge-type rectifier and LC filter, converting 220V AC input voltage to about 300V pulse DC voltage;
the power factor correction circuit including a secondary boosting circuit for obtaining a stable DC voltage of about 400V from the pulse DC voltage of 300V;
the control circuit providing a high voltage for exciting the fluorescent lamp, said high voltage is within the range of about 4-5kV at frequency of about 4-50kc.

3. The electric driver for fluorescent lamp according to Claim 2, wherein the input circuit further comprises: current protector, anti-EMI coil (L1) and thermal sensitive resistor.

4. The electric driver for fluorescent lamp according to Claim 2, wherein the power factor correction circuit comprises: inductor (L3), high power transistor (Q1), rectifying diode (D1), capacitor (C5), comparator, multiplier and current difference amplifier, wherein the voltage comparison circuit controls the output through voltage comparison, capable of ensuring stable output voltage, the circuit can also be configured to have over-current protection and over-voltage protection, such that high-frequency striking to the main circuit from electricity grid can be prevented.

5. The electric driver for fluorescent lamp according to Claim 4, wherein the voltage comparison circuit, multiplier, and current difference amplifier are included in an IC module L6561, the gate G of the high power regulator (Q1) is controlled by a square-wave signal generated by L6561, pin 1 and pin 2 of L6561 have a voltage comparison circuit, controlling the output through voltage comparison, pin 3 of L6561 has a multiplier, whose oscillating frequency can be determined by external circuit, pin 5 of L6561 has a current difference amplifier, current inputted from outside controls the output of L6561 after current detection.

6. The electric driver for fluorescent lamp according to claim 5, wherein configuration of the circuit makes the input voltage maintain normal operation of the driver within the input voltage and frequency range as defined according to the international standard, for example, ensuring normal operation of the driver at the voltage range of 90-300V.

7. The electric driver for fluorescent lamp according to Claim 2, wherein the control circuit comprises: a half bridge drive circuit, a series-connected resonance circuit, an under-voltage locking circuit, a frequency-adjustable voltage control oscillator, a zero voltage detector and a zero current comparator.

8. The electric driver for fluorescent lamp according to Claim 5, wherein the under-voltage locking circuit, frequency-adjustable voltage control oscillator, zero voltage detector and zero current comparator are included in an IC module IR2520, the IR2520 has a built-in under-voltage locking circuit, an externally frequency-adjustable voltage control oscillator, a zero voltage detector, a zero current comparator, and a half bridge driver for driving the transistors (Q2Q3) to turn on and turn off, the circuit goes into a state of under-voltage locking when the power supply voltage is unable to activate IR2520 to operate, the filament preheating circuit is activated when the power supply voltage goes up to be able to activate IR2520, during the beginning of actuation, the voltage control oscillator preheats the filament at a frequency above 2 times of the Fmin frequency, the Fmin is the inherent frequency of the voltage control oscillator, and can be adjusted through an external component (R14), the time of preheating can be adjusted through an external component (C8); The IR2520 circuit has a built-in wave peak ratio and zero voltage switch protection, through monitoring of the voltage at the midpoint (pin 6 of IR2520) of the half bridge, in case of over-current or saturation of inductance within the lamp loop, IR2520 goes into error mode, the gate driver is locked to a low level; if the triggering fails and the lamp test is invalid, the filament is opened, the IR2520 goes into error mode, and the gate driver is locked.

9. The electric driver for fluorescent lamp according to any of Claim 1-8, wherein the electric driver for fluorescent lamp is capable of driving 18W, 36W and 55W fluorescent lamps and ensuring their normal working.

10. The electric driver for fluorescent lamp according to any of Claim 1-8, wherein the power factor thereof reaches up to 99%.
